# EUROPÄISCHE PATENTSCHRIFT

(11) **EP 3 676 119 B1**
(45) Veröffentlichungstag und Bekanntmachung des Hinweises auf die Patenterteilung: **03.08.2022**
(21) Anmeldenummer: 18781962.8
(22) Anmeldetag: 14.08.2018
(51) Int. Cl.: B60K 6/36, B60K 6/48, B60K 6/547, F16H 3/089

(54) **GETRIEBEEINHEIT MIT SCHALTGETRIEBE UND E-MASCHINE SOWIE ANTRIEBSEINHEIT**
TRANSMISSION UNIT HAVING A MANUAL TRANSMISSION AND ELECTRIC MACHINE, AS WELL AS DRIVE UNIT
ENSEMBLE TRANSMISSION COMPRENANT UNE BOÎTE DE VITESSES ET UN MOTEUR ÉLECTRIQUE, ET UNITÉ D'ENTRAÎNEMENT

(30) Priorität: 30.08.2017 DE 102017119915; 26.02.2018 DE 102018104334
(43) Veröffentlichungstag der Anmeldung: 08.07.2020
(73) Patentinhaber: Getrag Ford Transmissions GmbH, 50735 Köln (DE)
(72) Erfinder: FOLKESSON, Johan, 51162 Vastra Gotalands Lan (SE)
(74) Vertreter: Wagner Albiger & Partner Patentanwälte mbB
(86) Internationale Anmeldenummer: PCT/EP2018/072066
(87) Internationale Veröffentlichungsnummer: WO 2019/042767

(56) Entgegenhaltungen:
- EP-A1- 1 467 123
- EP-A1- 2 883 732
- DE-A1-102010 052 746
- DE-A1-102011 088 592
- DE-B3-102015 224 207

## Beschreibung

Die Erfindung betrifft eine Getriebeeinheit für ein Kraftfahrzeug, wobei die Getriebeeinheit ein Schaltgetriebe und eine elektrische Maschine (E-Maschine) umfasst. Das Schaltgetriebe weist eine einzige Eingangswelle auf, die mit einem Hauptantrieb des Kraftfahrzeugs gekoppelt werden kann. Des Weiteren weist das Schaltgetriebe eine einzige Ausgangswelle auf, die mit einem Abtrieb des Kraftfahrzeugs gekoppelt werden kann. Die Erfindung betrifft auch eine Antriebseinheit, die die Getriebeeinheit und den Hauptantrieb umfasst.

Aus der DE 10 2012 024 677 A1 ist eine derartige Getriebeeinheit bekannt. Den Hauptantrieb stellt ein Verbrennungsmotor des Kraftfahrtzeugs dar, der in einem Ausführungsbeispiel über eine Anfahr- und Trennkupplung mit der Eingangswelle verbunden ist. Der Abtrieb wird gebildet durch ein Differential, dessen Gehäuse mit einem Festrad auf der Ausgangswelle kämmt.

Die Anbindung der E-Maschine an das Schaltgetriebe erfolgt über zwei unterschiedlich große Losräder, die auf der Ausgangswelle des Schaltgetriebes angeordnet sind und über eine Doppelgangschaltkupplung wahlweise mit der Ausgangswelle drehfest verbunden werden können. Die Losräder kämmen mit jeweils mit einer der Zahnrädern eines gestuften Antriebsritzel der E-Maschine, sodass zwei elektrische Gangstufen realisiert werden können. Zur Realisierung von verbrennungsmotoischen Gangstufen weist das Schaltgetriebe weitere Losräder und weitere Doppelgangschaltkupplungen auf, die ebenfalls alle auf der Ausgangswelle angeordnet sind.

Bei der Konstruktion und Auslegung der Getriebeeinheit mit Schaltgetriebe und E-Maschine müssen nicht nur Vorgaben wie beispielsweise Leistung, Anzahl der Gänge, minimale und maximale Übersetzung etc., sondern auch Vorgaben hinsichtlich Kosten und des Raumangebots (Packaging) im Motorraum des Kraftfahrzeugs berücksichtigt bzw. eingehalten werden. Dies kann im Einzelfall dazu führen, dass eine eigentlich favorisierte Getriebeeinheit nicht alle Vorgaben erfüllt und daher als mögliche Variante ausfällt.

Die DE 10 2011 088 592 A1 offenbart eine Getriebeeinheit mit einem Doppelkupplungsgetriebe und einer E-Maschine. Das Doppelkupplungsgetriebe weist zwei koaxiale Eingangswellen in Form einer Hohlwelle und einer Innenwelle, zwei Vorgelegewellen und eine Ausgangswelle auf. Die Anbindung der E-Maschine an das Doppelkupplungsgetriebe erfolgt über ein auf der Innenwelle angeordnetes Losrad mit zwei axial beabstandeten Zahnrädern, die mit Losrädern kämmen, die auf einer der Vorgelegewellen sitzen. Auf der Ausgangswelle sind lediglich Festräder angeordnet, von denen eins in einer Radabtriebsebene gleichzeitig mit zwei Festrädern kämmt, die jeweils einer der Vorgelegewellen zugeordnet sind.

Die EP 1 467 123 A1 offenbart eine Getriebeeinheit mit einem Schaltgetriebe, das eine einzelne Eingangswelle und eine einzelne Ausgangswelle umfasst, auf welchen jeweils Losräder angeordnet sind, die jeweils drei durch eine Hohlwelle fest verbundene Zahnräder aufweisen.

Der Erfindung liegt daher die Aufgabe zu Grunde, eine weitere, ein Schaltgetriebe und eine E-Maschine umfassende Getriebeeinheit bereit zu stellen, die kompakt und einfach aufgebaut ist und eine Vielzahl von Gangstufen aufweist.

Die der Erfindung zu Grunde liegende Aufgabe wird mit der Getriebeeinheit gemäß Anspruch 1 gelöst. Ausführungsbeispiele der Erfindung können den Unteransprüchen zu Anspruch 1 entnommen werden.

Erfindungsgemäß ist vorgesehen, dass die Anbindung der E-Maschine an das Schaltgetriebe über ein Losradpaket erfolgt, dass ein auf der Eingangswelle angeordnetes erstes Eingangswellen-Losrad, ein zweites Eingangswellen-Losrad, welches ein erstes Zahnrad und ein im Durchmesser unterschiedlich großes zweites Zahnrad aufweist, und eine erste Doppelgangschaltkupplung umfasst. Durch die erste Doppelgangschaltkupplung sind in einer ersten Aktivstellung der Doppelgangschaltkupplung das erste Eingangswellen-Losrad mit der Eingangswelle und in einer zweiten Aktivstellung das zweite Eingangswellen-Losrad mit der Eingangswelle drehfest verbindbar. Des Weiteren umfasst das Losradpaket ein auf der Ausgangswelle angeordnetes erstes Ausgangswellen-Losrad, ein zweites Ausgangswellen-Losrad, welches ein erstes Zahnrad und ein im Durchmesser unterschiedlich großes zweites Zahnrad aufweist, und eine zweite Doppelgangschaltkupplung. Die zweite Doppelgangschaltkupplung dient dazu, in einer ersten Aktivstellung das zweite Ausgangswellen-Losrad mit der Ausgangswelle und in einer zweiten Aktivstellung das erste Ausgangswellen-Losrad mit der Ausgangswelle drehfest zu verbinden. Erfindungsgemäß kämmt das erste Eingangswellen-Losrad unmittelbar mit dem ersten Zahnrad des zweiten Ausgangswellen-Losrades, während das erste Ausgangswellen-Losrad mit dem ersten Zahnrad des zweiten Eingangswellen-Losrades unmittelbar kämmt. Zudem steht das zweite Zahnrad des zweiten Eingangswellen-Losrades mit dem zweiten Zahnrad des zweiten Ausgangswellen-Losrades in unmittelbaren kämmenden Eingriff.

Der unmittelbare kämmende Eingriff zwischen zwei Zahnrädern bedeutet, dass kein weiteres Zahnrad oder kein weiteres Bauteil zwischen diesen beiden Zahnrädern geschaltet ist. Entsprechend greifen die Verzahnungen der beiden zwei Zahnräder unmittelbar ineinander.

In einem Ausführungsbeispiel erfolgt die Anbindung der E-Maschine über das erste Eingangswellen-Losrad. Alternativ kann die Anbindung der E-Maschine auch über das erste Zahnrad des zweiten Ausgangswellen-Losrad erfolgen. Durch eine derartige Anbindung der E-Maschine wird eine elektromotorische Antriebsleistung der E-Maschine auf das betreffende Losrad übertragen und somit in das Lospaket übertragen. Über eine der Doppelgangschaltkupplung des Losradpakets oder durch die beiden Doppelgangschaltkupplungen des Losradpakets kann diese elektromotorische Antriebsleistung auf die Eingangswelle, die Ausgangswelle oder auf beide Wellen geleitet werden. Beispielsweise kann durch die E-Maschine ein Verbrennungsmotor gestartet werden, der an der Eingangswelle beispielsweise über eine Reibkupplung angekoppelt ist. Dazu befindet sich die erste Doppelgangschaltkupplung in einer ihrer Aktivstellungen, so dass die E-Maschine den Verbrennungsmotor über die Eingangswelle starten kann. Die zweite, auf der Ausgangswelle sitzende Doppelgangschaltkupplung des Losradpakets ist dabei vorzugsweise geöffnet, so dass der Abtrieb von dem Startvorgang entkoppelt ist. Auch ließe sich bei geöffneter zweiter Doppelgangschaltkupplung der Verbrennungsmotor als Generator zur Stromerzeugung nutzen. Die E-Maschine kann im Sinne der Erfindung motorisch oder zur Stromerzeugung bzw. zum Aufladen einer Batterie genutzt werden.

Die E-Maschine kann ein Antriebsritzel aufweisen, dass mit einem der Losräder des Losradpakets unmittelbar oder über ein Zwischenrad in kämmenden Eingriff steht. Erfolgt die Anbindung der E-Maschine beispielsweise über das erste Eingangswellen-Losrad, so steht dieses erste Eingangswellen-Losrad sowohl mit dem ersten Zahnrad des zweiten Ausgangswellen-Losrads als auch mit Antriebsritzel in unmittelbaren kämmenden Eingriff. Ist ein Zwischenrad vorgesehen, kämmt das Zwischenrad unmittelbar mit dem zweiten Ausgangswellen-Losrad.

Durch das Losradpaket lassen sich mehrere Gangstufen im Schaltgetriebe realisieren. Dabei kann über jede dieser Gangstufen die elektromotorische Leistung oder auch die Leistung des Hauptantriebs über die Eingangswelle und die Ausgangswelle zum Abtrieb geleitet werden. Auch ist es möglich, die E-Maschine als Booster zu verwenden. Im letztgenannten Fall werden in das Losradpaket gleichzeitig die elektromotorische Leistung und die Leistung des Hauptantriebs eingespeist.

Das zweite Ausgangswellen-Losrad kann ein drittes Zahnrad aufweisen, über das die Anbindung der E-Maschine in das Losradpaket erfolgt.

Das Zwischenrad, das zwischen Antriebsritzel der E-Maschine und einem der Losräder des Losradpakets geschaltet sein kann, kann als gestuftes Zahnrad mit einem kleineren Zahnrad und einem größeren Zahnrad ausgebildet sein. Dabei kann das größere Zahnrad im unmittelbaren kämmenden Eingriff mit dem Antriebsritzel der E-Maschine stehen. Das kleinere Zahnrad des Zwischenrads kämmt in diesem Fall unmittelbar mit dem ersten Eingangswellen-Losrad bzw. mit einem Zahnrad des zweiten Ausgangswellen-Losrads.

Die erste Doppelgangschaltkupplung der Eingangswelle kann axial zwischen dem ersten Zahnrad und dem zweiten Zahnrad des zweiten Ausgangswellen - Losrads angeordnet sein. Zusätzlich oder alternativ kann die zweite Doppelgangschaltkupplung auf axial zwischen dem ersten Zahnrad und dem zweiten Zahnrad des zweiten Eingangswellen-Losrad angeordnet sein.

In einem Ausführungsbeispiel kommt es in radialer Richtung gesehen, also in Richtung einer Verbindungslinie zwischen Eingangswellen und Ausgangswelle, zu einer Überschneidung der ersten Doppelgangschaltkupplung mit wenigstens einem der Zahnräder des zweiten Ausgangswellen-Losrads. Dies bedeutet, dass ein äußerer Durchmesser der ersten Doppelgangschaltkupplung der Eingangswellen und ein Außendurchmesser des größten Zahnrads des zweiten Ausgangswellen-Losrads in Summe größer sind als ein Achsabstand zwischen Eingangwelle und Ausgangswelle. Auch ein äußerer Durchmesser der zweiten Doppelgangschaltkupplung auf der Ausgangswelle und ein Außendurchmesser des größten Zahnrads des zweiten Eingangswellen-Losrads kann größer sein als der Achsabstand zwischen Eingangswelle und Ausgangswelle.

In einem Ausführungsbeispiel umfasst das Schaltgetriebe wenigstens eine dritte Doppelgangschaltkupplung, durch die zwei weitere Losräder, die auf der Ausgangswelle angeordnet sind, drehfest mit der Ausgangswelle verbunden werden können. In diesem Ausführungsbeispiel sind zwei Festräder auf der Eingangswellen angeordnet, die mit den Losrädern auf der Ausgangswelle in Eingriff stehen. Dadurch kann die Anzahl der Gangstufen des Schaltgetriebes erhöht werden.

In einem alternativen Ausführungsbeispiel sorgt die dritte Doppelgangschaltkupplung dafür, dass die zwei weiteren Losräder, die nun auf der Eingangswelle angeordnet sind, drehfest mit der Eingangswelle verbunden werden können. Entsprechend sind in diesem Ausführungsbeispiel zusätzliche Festräder auf der Ausgangswelle vorzusehen.

Eines der zwei weiteren Losräder auf der Eingangswellen kann mit dem dritten Zahnrad des zweiten Ausgangswellen Losrad unmittelbar im kämmenden Eingriff stehen. Dies sorgt für ein kompaktes Schaltgetriebe mit vielen möglichen Gangstufen.

Erfindungsgemäß weist das Schaltgetriebe keine weitere Eingangswelle auf. Es handelt sich somit nicht um ein Doppelkupplungsgetriebe, das zwei Eingangswellen aufweist. Erfindungsgemäß weist das Schaltgetriebe nur eine einzige Eingangswelle auf. Auch handelt es sich nicht um ein lastverzweigendes Getriebe, bei dem die Leistung des Hauptantriebs von der Eingangswelle auf zwei Ausgangswellen verzweigt wird. Erfindungsgemäß weist das Schaltgetriebe nur eine einzige Eingangswelle und nur eine einzige Ausgangswelle auf.

Eine weitere Aufgabe der Erfindung, die Bereitstellung einer die Getriebeeinheit und den Hauptantrieb umfassenden Antriebseinheit, wird mit Anspruch 11 gelöst. Ein Ausführungsbeispiel für die Antriebseinheit beschreibt Anspruch 12.

Bei der erfindungsgemäßen Antriebseinheit ist der Hauptantrieb mit der Eingangswelle des Schaltgetriebes der Getriebeeinheit gekoppelt. In einem Ausführungsbeispiel ist zwischen dem Hauptantrieb und der Eingangswelle eine Kupplung vorgesehen, die beispielsweise als Reibkupplung oder als einfache Trennkupplung ausgestaltet sein kann. Es ist auch möglich, keine Kupplung zwischen Eingangswelle des Schaltgetriebes und dem Hauptantrieb, welcher beispielsweise ein Verbrennungsmotor sein kann, vorzusehen. In diesem Fall kann eine drehfeste Verbindung zwischen Eingangswelle und Hauptantrieb bestehen.

Anhand der in den Figuren dargestellten Ausführungsbeispiele wird die Erfindung näher erläutert. Es zeigen:
- Figur 1: schematisch ein erstes Ausführungsbeispiel der Erfindung; und
- Figur 2: schematisch zweites Ausführungsbeispiel der Erfindung.

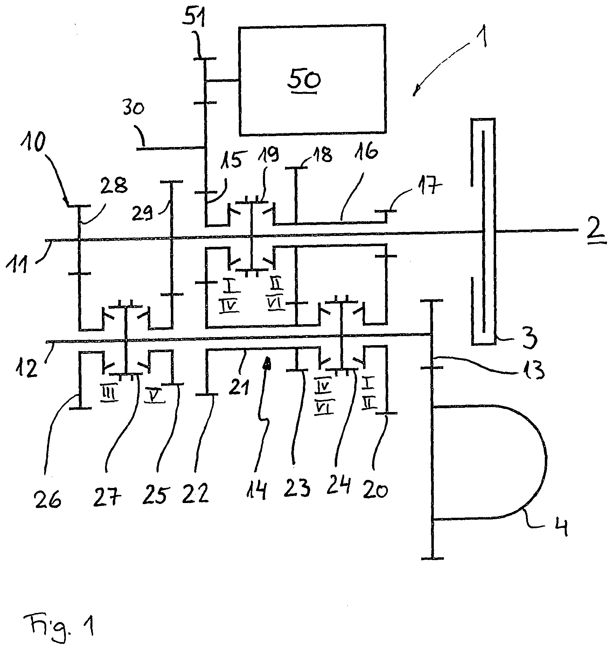

Figur 1 zeigt einen Antriebsstrang mit einer Getriebeeinheit 1, einen hier nicht weiter dargestellten Verbrennungsmotor 2 mit einer Kupplung 3 sowie einen Abtrieb 4, der hier in Form eines Differenzials abgebildet ist. Die Getriebeeinheit 1 umfasst ein Schaltgetriebe 10 und eine elektrische Maschine 50, die im Folgenden als E Maschine bezeichnet wird. Der Antriebsstrang mit der Getriebeeinheit 1, den Verbrennungsmotor 2, der Kupplung 3 und dem Differenzial 4 kann in einem Kraftfahrzeug eingebaut werden, beispielsweise als Front-Quer-Einbau.

Das Schaltgetriebe 10 weist eine Eingangswelle 11 und eine dazu parallel angeordnete Ausgangswelle 12 auf. Bei geschlossener Kupplung 3 ist die Eingangswelle 11 drehfest mit dem Verbrennungsmotor 2 verbunden. Durch Öffnen der Kupplung 3 lässt sich die Eingangswelle 11 von dem Verbrennungsmotor 2 trennen. Die Ausgangswelle 12 weist einen Abtriebsritzel 13 auf, das mit dem Differenzial 4 oder genauer gesagt mit einem Gehäuse des Differenzials 4 im kämmenden Eingriff steht.

Das Schaltgetriebe 10 weist ein mit 14 bezeichnetes Losradpaket auf. Das Losradpaket 14 umfasst ein erstes Eingangswellen-Losrad 15 und ein zweites Eingangswellen-Losrad 16. Das zweite Eingangswellen-Losrad 16 weist ein erstes Zahnrad 17 und ein zweites Zahnrad 18 auf. Der Durchmesser des ersten Zahnrads 17 ist dabei kleiner als der Durchmesser des zweiten Zahnrads 18. Zur drehfesten Verbindung des ersten Eingangswellen-Losrads 15 und des zweiten Eingangswellen-Losrad 16 ist eine Doppelgangschaltkupplung 19 vorgesehen. In einer ersten oder in der Darstellung der Figur 1 linken Aktivstellung der Doppelgangschaltkupplung 19 ist das erste Eingangswellen-Losrad 15 drehfest mit der Eingangswelle 11 verbunden. Über eine zweite oder rechte Aktivstellung der Doppelgangschaltkupplung 19 lässt sich das zweite Eingangswellen-Losrad 16 drehfest mit der Eingangswelle 11 verbinden.

Das Losradpaket 14 umfasst des Weiteren ein erstes Ausgangswellen-Losrad 20 und ein zweites Ausgangswellen-Losrad 21, welches ein erstes Zahnrad 22 und ein zweites Zahnrad 23 aufweist. Das zweite Zahnrad des zweiten Ausgangswellen-Losrads 21 ist dabei kleiner als das erste Zahnrad 22. Eine zweite Doppelgangschaltkupplung 24 des Losradpakets 14 dient dazu, das erste Ausgangswellen-Losrad 20 bzw. das zweite Ausgangswellen-Losrad 21 drehfest mit der Ausgangswelle 12 zu verbinden. In einer ersten oder linken Aktivstellung ist das zweite Ausgangswellen-Losrad 22, in einer zweiten Aktivstellung ist das erste Ausgangswellen Losrad 20 drehfest mit der Ausgangswelle 12 verbunden.

Das erste Eingangswellen-Losrad 15 steht im unmittelbaren kämmenden Eingriff mit dem ersten Zahnrad des zweiten Ausgangswellen-Losrads 21. Ebenso ist ein unmittelbarer kämmenden Eingriff zwischen dem ersten Ausgangswellen-Losrad 20 und dem zweiten Zahnrad des zweiten Eingangswellen-Losrad 16 gegeben. Innerhalb des Losradpakets gibt es noch einen weiteren unmittelbaren kämmenden Eingriff, nämlich zwischen dem zweiten Zahnrad 18 des zweiten Eingangswellen-Losrads 16 und dem zweiten Zahnrad 23 des zweiten Ausgangswellen-Losrads 21. Somit sind in dem Losradpaket 21 genau drei unmittelbare kämmen de Eingriffe realisiert.

Die E-Maschine 15 weist ein Antriebsritzel 51 auf, das mit einem Zwischenrad 30 kämmt. Das Zwischenrad 30 wiederum steht im unmittelbaren kämmenden Eingriff mit dem ersten Eingangswellen-Losrad 15.

Das Schaltgetriebe 10 weist des Weiteren zwei Losräder 25, 26 auf, die auf der Ausgangswelle 12 angeordnet sind. Zwischen den Losrädern 25 und 26 befindet sich eine weitere oder dritte Doppelgangschaltkupplung 27. Die Gangschaltkupplung 27 dient dazu, das Losrad 26 (linke Aktivstellung) oder das Losrad 25 (rechte Aktivstellung) drehfest mit der Ausgangswelle 12 zu verbinden. Auf der Eingangswelle 10 sind zwei Festräder 28, 29 angeordnet, wobei das Festrad 28 mit dem Losrad 26 und das Festrad 29 mit dem Losrad 25 kämmen.

Zum Einlegen einer ersten Gangstufe I werden die erste Gangschaltkupplung 19 in die linke Aktivstellung und die zweite Doppelgangschaltkupplung 24 in die rechte Aktivstellung bewegt. Bei einem Antrieb durch den Verbrennungsmotor 2 erfolgt somit ein Drehmomentfluss über die Eingangswelle 11 und das erste Eingangswellen-Losrad 15 auf das erste Zahnrad 22 des zweiten Ausgangswellen- Losrads 21. Der Drehmomentfluss wird weitergeführt über das zweite Zahnrad 23 auf das zweite Zahnrad 18 des zweiten Eingangswellen-Losrads 16, das aufgrund der linken Aktivstellung der ersten Doppelgangschaltkupplung 19 in Drehrichtung lose auf der Eingangswelle 11 sitzt. Über das erste Zahnrad 17 wird das erste Ausgangswellen-Losrad 20 angetrieben, welches aufgrund der rechten Aktivstellung der zweiten Doppelgangschaltkupplung 24 drehfest mit der Ausgangswelle 12 und somit dem Abtrieb 4 verbunden ist. Die Ziffer I an der ersten Doppelgangschaltkupplung 19 und an der zweiten Doppelgangschaltkupplung 24 soll die jeweilige Aktivstellung kennzeichnen, die notwendig ist, damit die erste Gangstufe I bzw. der erste Gang I im Schaltgetriebe 10 eingelegt ist.

Über das Losradpaket 14 lassen sich zudem eine zweite Gangstufe II, eine vierte Gangstufe IV und eine sechste Gangstufe VI realisieren. Bei beispielsweise eingelegter Gangstufe VI befinden sich die erste Doppelgangschaltkupplung 19 in der rechten Aktivstellung und die zweite Doppelgangschaltkupplung 24 in der linken Aktivstellung.

Mit der dritten Doppelgangschaltkupplung 27 lassen sich eine dritte Gangstufe III und eine fünfte Gangstufe V einlegen. Bei eingelegter Gangstufe III beispielsweise erfolgt der Drehmomentfluss von dem Verbrennungsmotor 2 über die geschlossene Kupplung 3 und über die Eingangswelle 11 auf das Festrad 28, das mit dem Losrad 26 im unmittelbaren kämmenden Eingriff steht. Der Drehmomentfluss wird über das Losrad 26, die Doppelgangschaltkupplung 27, die Ausgangswelle 12 mit dem Abtriebsritzel 13 auf den Abrieb 4 weitergeleitet.

Die E-Maschine 50 kann als Booster eingesetzt werde, also den Verbrennungsmotor 2 unterstützen. Ist beispielsweise die erste Gangstufe I eingelegt und laufen der Verbrennungsmotor 2 und die E-Maschine parallel, so wird gleichzeitig eine elektromotorische Antriebsleistung und die Leistung des Verbrennungsmotors 2 in das Losradpaket 14 eingespeist. In allen Gangstufen I bis VI ist ein Parallelantrieb von Verbrennungsmotor 2 und E-Maschine 50 möglich.

Zudem ist durch die Erfindung möglich, dass der Verbrennungsmotor 2 und die E-Maschine 50 miteinander verbunden sein können und dass sich die Ausgangswelle 12 davon entkoppelt ist. Dabei befindet sich lediglich die erste Doppelgangschaltkupplung 19 in der linken oder rechten Aktivstellung (die zweite Doppelgangschaltkupplung 24 und die dritte Doppelgangschaltkupplung 27 befinden sich jeweils in der hier dargestellten Neutralstellung). Dadurch ist ein Anlassen des Motors 2 durch die E-Maschine 50 möglich, während der Abtrieb 4 und somit das Fahrzeug stillsteht. Auch ist es so möglich, dass bei stillstehendem Fahrzeug der Verbrennungsmotor 2 die E-Maschine 50 antreibt, um somit eine Batterie des Kraftfahrzeugs aufzuladen. Die E-Maschine 50 kann somit als elektrischer Motor oder als elektrischer Generator zum Einsatz kommen.

Ein weiterer Vorteil der Erfindung besteht darin, dass bei einem Gangwechsel von einer Gangstufe in eine andere Gangstufe die E-Maschine 50 eine Drehmomentlücke füllen kann. Soll beispielsweise das Schaltgetriebe 10 von der ersten Gangstufe I in die zweite Gangstufe II geschaltet werden, so muss die erste Doppelgangschaltkupplung 19 von der linken Aktivstellung in die rechte Aktivstellung bewegt werden. Während diesem Schaltvorgang kann die E-Maschine 50 eine Antriebsleistung liefern, die über die Zahnradfolge 51, 25, 15, 23, 18, 17, 20 auf die Ausgangswelle 12 geleitet wird. Das füllen der Drehmomentlücke beim Schaltvorgang ist immer möglich, wenn von einer Gangstufe auf die nächst höhere Gangstufe geschaltet wird. Darüber hinaus ist ein Auffüllen der Drehmomentlücke auch bei weiteren Schaltvorgängen (beispielsweise von I auf III) möglich.

Bei eingelegter dritter Gangstufe III erfolgt ein Gangwechsel für die E-Maschine 50. Bei diesem Gangwechsel wird die zweite Doppelgangschaltkupplung 24 von der rechten Aktivstellung in die linke Aktivstellung verschoben.

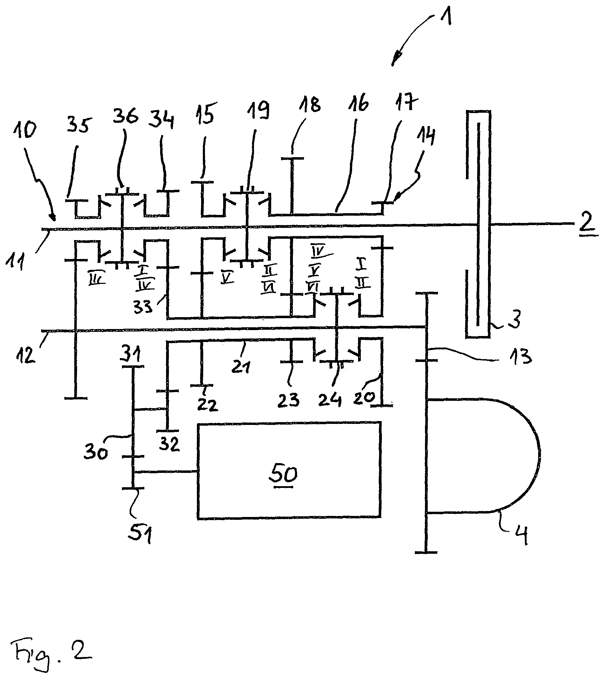

Figur 2 zeigt ein weiteres Ausführungsbeispiel der Erfindung, wobei Bauteile, die ähnlich oder identisch zu den Bauteilen des Ausführungsbeispiels der Figur 1 sind, mit gleichen Bezugszeichen versehen sind. Entsprechend wird auf die Ausführungen zu Figur 1 verwiesen.

Ein Unterschied zum Ausführungsbeispiel der Figur 1 besteht darin, dass die E-Maschine 50 nicht über das erste Eingangswellen-Losrad 15, sondern über das zweite Ausgangswellen-Losrad 21 an das Schaltgetriebe 10 angebunden ist. Das Abtriebsritzel 51 der E Maschine 50 kämmt mit einem gestuften Zwischenrad 30, dass ein größeres Zahnrad 31 und ein kleineres Zahnrad 32 aufweist. Das größere Zahnrad 31 steht im unmittelbaren kämmenden Eingriff mit dem Abtriebsritzel 51, während das kleinere Zahnrad 32 unmittelbar mit einem dritten Zahnrad 33 des zweiten Ausgangswellen-Losrads 21 kämmt. Das dritte Zahnrad 33 kämmt des Weiteren mit einem Losrad 34, welches auf der Eingangswelle 11 angeordnet ist. Darüber hinaus ist auf der Eingangswelle 11 ein weiteres Losrad 35 angeordnet. Über eine hier nun mit 36 bezeichnete dritte Doppelgangschaltkupplung lässt sich das Losrad 34 bzw. das Losrad 35 drehfest mit der Eingangswellen 11 verbinden.

Es sei an dieser Stelle betont, dass die Anbindung der E-Maschine 50 über ein beliebiges Losrad des Losradspakets erfolgen kann (beispielsweise alternativ über das zweite Eingangswellen-Losrad 16 oder das erste Ausgangswellen-Losrad 20). Eine andere Möglichkeit im Ausführungsbeispiel der Figur 2 besteht darin, dass Losrad 34 zur Anbindung der E-Maschine 50 zu verwenden.

Mit diesem Ausführungsbeispiel lassen sich ebenfalls sechs Gangstufen I bis VI realisieren. Ist beispielsweise die vierte Gangstufe IV eingelegt, so befindet sich die erste Doppelgangschaltkupplung 19 in der in Figur 2 dargestellten Neutralstellung, die zweite Doppelgangschaltkupplung 24 in der linken Aktivstellung und die dritte Doppelgangschaltkupplung 36 in der rechten Aktivstellung. Der Drehmomentfluss von dem Verbrennungsmotor 2 erfolgte dabei über das Losrad 34 auf das zweite Ausgangswellen-Losrad 21, das über die zweite Doppelgangschaltkupplung 24 drehfest mit der Ausgangswelle 12 verbunden ist.

Es sei darauf hingewiesen, dass zwischen der E-Maschine 50 und dem jeweiligen Losrad, über das die E-Maschine 50 an das Schaltgetriebe 10 angebunden ist, eine Trennvorrichtung vorgesehen sein kann, um die E-Maschine 50 von dem Losradpaket 14 zeitweise zu entkoppeln.

Die Ausführungsbeispiele der Figuren 1 und 2 weisen keinen mechanischen Rückwärtsgang auf. Ein Rückwärtsfahren des Kraftfahrzeugs wäre grundsätzlich durch die E-Maschine 50 möglich (beispielsweise durch einen Rückwärtslauf der E-Maschine 50 und bei rechte Aktivstellung der zweiten Doppelgangschaltkupplung 24). Es ist aber auch möglich, die Ausführungsbeispiele der Figur 1 und 2 mit einem zusätzlichen mechanischen Rückwärtsgang auszustatten, was aber hier nicht dargestellt ist.

### Bezugszeichenliste

- 1: Getriebeeinheit
- 2: Verbrennungsmotor
- 3: Kupplung
- 4: Differenzial
- 10: Schaltgetriebe
- 11: Eingangswelle
- 12: Ausgangswelle
- 13: Abtriebsritzel
- 14: Losradpaket
- 15: Erstes Eingangswellen-Losrad
- 16: Zweites Eingangswellen-Losrad
- 17: Erstes Zahnrad
- 18: Zweites Zahnrad
- 19: Erste Doppelgangschaltkupplung
- 20: Erstes Ausgangswellen-Losrad
- 21: Zweites Ausgangswellen-Losrad
- 22: Erstes Zahnrad
- 23: Zweites Zahnrad
- 24: Zweite Doppelgangschaltkupplung
- 25: Losrad
- 26: Losrad
- 27: Dritte Doppelgangschaltkupplung
- 28: Festrad
- 29: Festrad
- 30: Zwischenrad
- 31: Größeres Zahnrad
- 32: Kleineres Zahnrad
- 33: Drittes Zahnrad
- 34: Losrad
- 35: Losrad
- 36: Dritte Doppelgangschaltkupplung

## Patentansprüche

1. Getriebeeinheit (1) für ein Kraftfahrzeug, mit einem Schaltgetriebe (10) und einer E-Maschine (50), wobei das Schaltgetriebe (10) eine einzige, mit einem Hauptantrieb des Kraftfahrzeugs koppelbare Eingangswelle (11) und eine einzige, mit einem Abtrieb des Kraftfahrzeugs koppelbare Ausgangswelle (12) umfasst, wobei die Anbindung der E-Maschine (50) an das Schaltgetriebe (10) über ein Losradpaket (14) erfolgt, das umfasst:
- ein auf der Eingangswelle (11) angeordnetes erstes Eingangswellen-Losrad (15), ein zweites Eingangswellen-Losrad (16), welches ein erstes Zahnrad (17) und ein im Durchmesser unterschiedlich großes zweites Zahnrad (18) aufweist, und eine erste Doppelgangschaltkupplung (19), durch die in einer ersten Aktivstellung das erste Eingangswellen-Losrad (15) mit der Eingangswelle (11) und in einer zweiter Aktivstellung das zweite Eingangswellen-Losrad (16) mit der Eingangswelle (11) drehfest verbindbar sind,
- eine auf der Ausgangswelle (12) angeordnetes erstes Ausgangswellen-Losrad (20), ein zweites Ausgangswellen-Losrad (21), welches ein erstes Zahnrad (22) und ein im Durchmesser unterschiedlich großes zweites Zahnrad (23) aufweist, wobei das erste Eingangswellen-Losrad (15) mit dem ersten Zahnrad (22) des zweiten Ausgangswellen-Losrades (21) unmittelbar kämmt, das erste Ausgangswellen-Losrad (20) mit dem ersten Zahnrad (17) des zweiten Eingangswellen-Losrades (16) unmittelbar kämmt, und wobei das zweite Zahnrad (18) des zweiten Eingangswellen-Losrades (16) mit dem zweiten Zahnrad (23) des zweiten Ausgangswellen-Losrades (21) unmittelbar kämmt,
**dadurch gekennzeichnet, dass** das Losradpaket (14) eine zweite Doppelgangschaltkupplung (24) umfasst, durch die in einer ersten Aktivstellung das zweite Ausgangswellen-Losrad (21) mit der Ausgangswelle (12) und in einer zweiter Aktivstellung das erste Ausgangswellen-Losrad (20) mit der Ausgangswelle (12) drehfest verbindbar sind.

2. Getriebeeinheit (1) nach Anspruch 1, **dadurch gekennzeichnet, dass** die Anbindung der E-Maschine (50) über das erste Eingangswellen-Losrad (15) des Losradpakets (14) erfolgt.

3. Getriebeeinheit (1) nach Anspruch 1, **dadurch gekennzeichnet, dass** die Anbindung der E-Maschine (50) über das erste Zahnrad (22) des zweiten Ausgangswellen-Losrads (21) erfolgt.

4. Getriebeeinheit (1) nach Anspruch 1, **dadurch gekennzeichnet, dass** das zweite Ausgangswellen-Losrad (21) ein drittes Zahnrad (33) aufweist, über das die Anbindung der E-Maschine (50) in das Losradpaket (14) erfolgt.

5. Getriebeeinheit (1) nach einem der Ansprüche 2 bis 4, **dadurch gekennzeichnet, dass** die E-Maschine (50) ein Antriebsritzel (51) aufweist, das mit einem der Losräder des Losradpakets (14) über ein Zwischenrad (30) in kämmenden Eingriff steht.

6. Getriebeeinheit (1) nach Anspruch 5, **dadurch gekennzeichnet, dass** das Zwischenrad (30) ein gestuftes Zahnrad mit einem kleineren Zahnrad (32) und einem größeren Zahnrad (33) ist.

7. Getriebeeinheit (1) nach einem der Ansprüche 1 bis 6, **dadurch gekennzeichnet, dass** die erste Doppelgangschaltkupplung (19) der Eingangswelle (11) axial zwischen den Zahnrädern (22, 23) des zweiten Ausgangswellen-Losrads (21) und die zweite Doppelgangschaltkupplung (24) auf der Ausgangswelle (12) axial zwischen den Zahnrädern (17, 18) des zweiten Eingangswellen-Losrads (16) angeordnet sind.

8. Getriebeeinheit (1) nach einem der Ansprüche 1 bis 7, **dadurch gekennzeichnet, dass** das Schaltgetriebe (10) wenigstens eine dritte Doppelgangschaltkupplung (27) umfasst, durch die zwei weitere Losräder (25, 26), die auf der Ausgangswelle (12) angeordnet sind, drehfest mit der Ausgangswelle (12) verbindbar sind.

9. Getriebeeinheit (1) nach einem der Ansprüche 1 bis 7, **dadurch gekennzeichnet, dass** das Schaltgetriebe (10) wenigstens eine dritte Doppelgangschaltkupplung (30) umfasst, die die zwei weiteren Losräder (34, 35), die auf der Eingangswelle (11) angeordnet sind, drehfest mit der Eingangswelle (11) verbindbar sind.

10. Getriebeeinheit (1) nach Anspruch 4 und Anspruch 9, **dadurch gekennzeichnet, dass** eines der zwei weiteren Losräder (34, 35) mit dem dritten Zahnrad (33) des zweiten Ausgangswellen-Losrad (21) unmittelbar im kämmenden Eingriff steht.

11. Antriebseinheit mit einer Getriebeeinheit (1) nach einem der Ansprüche 1 bis 10 und mit einem Hauptantrieb (2), wobei die Eingangswelle (11) des Schaltgetriebes der Getriebeeinheit mit dem Hauptantrieb gekoppelt ist.

12. Antriebseinheit nach Anspruch 11, **dadurch gekennzeichnet, dass** zwischen dem Hauptantrieb (2) und der Eingangswelle (11) eine Kupplung (3) vorgesehen ist.

## Claims

1. Transmission unit (1) for a motor vehicle, having a manual transmission (10) and an electric machine (50), wherein the manual transmission (10) has one single input shaft (11) which can be coupled to a main drive of the motor vehicle, and one single output shaft (12) which can be coupled to an output of the motor vehicle, wherein the connection of the electric machine (50) to the manual transmission (10) is carried out via an idler gear pack (14) which comprises:
- a first input shaft idler gear (15) arranged on the input shaft (11), a second input shaft idler gear (16) which has a first gearwheel (17) and a second gearwheel (18) with a different-sized diameter and a first double-speed manual transmission (19) by means of which in a first active position the first input shaft idler gear (15) can be connected non-rotationally to the input shaft (11) and in a second active position the second input shaft idler gear (16) can be connected non-rotationally to the input shaft (11),
- a first output shaft idler gear (20) arranged on the output shaft (12), a second output shaft idler gear (21) which has a first gearwheel (22) and a second gearwheel (23) having a differently-sized diameter, wherein the first input shaft idler gear (15) meshes directly with the first gearwheel (22) of the second output shaft idler gear (21), the first output shaft idler gear (20) meshes directly with the first gearwheel (17) of the second input shaft idler gear (16), and wherein the second gearwheel (18) of the second input shaft idler gear (16) meshes directly with the second gearwheel (23) of the second output shaft idler gear (21), **characterised in that** the idler gear pack (14) comprises a second double-speed manual transmission (24) by means of which in a first active position the second output shaft idler gear (21) can be connected non-rotationally to the output shaft (12) and in a second active position the first output shaft idler gear (20) can be connected non-rotationally to the output shaft (12).

2. Transmission unit (1) according to claim 1, **characterised in that** the connection of the electric machine (50) is carried out via the first input shaft idler gear (15) of the idler gear pack (14).

3. Transmission unit (1) according to claim 1, **characterised in that** the connection of the electric machine (50) is carried out via the first gearwheel (22) of the second output shaft idler gear (21).

4. Transmission unit (1) according to claim 1, **characterised in that** the second output shaft idler gear (21) has a third gearwheel (33) via which the connection of the electric machine (50) into the idler gear pack (14) is carried out.

5. Transmission unit (1) according to any of claims 2 to 4, **characterised in that** the electric machine (50) has a drive pinion (51) which is in meshing engagement with one of the idler gears of the idler gear pack (14) via an intermediate gear (30).

6. Transmission unit (1) according to claim 5, **characterised in that** the intermediate gear (30) is a stepped gear with a smaller gearwheel (32) and a larger gearwheel (33).

7. Transmission unit (1) according to any of claims 1 to 6, **characterised in that** the first double-speed manual transmission (19) of the input shaft (11) is arranged axially between the gearwheels (22, 23) of the second output shaft idly gear (21) and the second double-speed manual transmission (24) is arranged on the output shaft (12) axially between the gearwheels (17, 18) of the second input shaft idler gear (16).

8. Transmission unit (1) according to any of claims 1 to 7, **characterised in that** the manual transmission (10) comprises at least one third double-speed manual transmission (27) by means of which two further idler gears (25, 26), which are arranged on the output shaft (12), can be connected non-rotationally to the output shaft (12).

9. Transmission unit (1) according to any of claims 1 to 7, **characterised in that** the manual transmission (10) comprises at least one third double-speed manual transmission (30) through which the two further idler gears (34, 35), which are arranged on the input shaft (11), can be connected non-rotationally to the input shaft (11).

10. Transmission unit (1) according to claim 4 and claim 9, **characterised in that** one of the two further idler gears (34, 35) is in direct meshing engagement with the third gearwheel (33) of the second output shaft idler gear (21).

11. Drive unit having a transmission unit (1) according to any of claims 1 to 10, and having a main drive (2), wherein the input shaft (11) of the manual transmission of the transmission unit is coupled to the main drive.

12. Drive unit according to claim 11 **characterised in that** a clutch (3) is provided between the main drive (2) and the input shaft (11).

## Revendications

1. Unité de transmission (1) pour un véhicule automobile, avec une boîte de vitesses (10) et une machine électrique (50), dans laquelle la boîte de vitesses (10) comprend un seul arbre d'entrée (11) pouvant être couplé à un entraînement principal du véhicule automobile et un seul arbre de sortie (12) pouvant être couplé à une sortie du véhicule automobile, dans laquelle la liaison de la machine électrique (50) à la boîte de vitesses (10) s'effectue par l'intermédiaire d'un ensemble de pignon fou (14) qui comprend :
- un premier pignon fou d'arbre d'entrée (15) disposé sur l'arbre d'entrée (11), un deuxième pignon fou d'arbre d'entrée (16), lequel présente un premier pignon (17) et un deuxième pignon (18) de diamètre différent, et un premier embrayage à double vitesse (19) par lequel, dans une première position active, le premier pignon fou d'arbre d'entrée (15) peut être connecté à l'arbre d'entrée (11) et, dans une deuxième position active, le deuxième pignon fou d'arbre d'entrée (16) peut être connecté à l'arbre d'entrée (11) de manière non rotative,
- un premier pignon fou d'arbre de sortie (20) disposé sur l'arbre de sortie (12), un deuxième pignon fou d'arbre de sortie (21), lequel présente un premier pignon (22) et un deuxième pignon (23) de diamètre différent, dans laquelle le premier pignon fou d'arbre d'entrée (15) s'engrène directement avec le premier pignon (22) du deuxième pignon fou d'arbre de sortie (21), le premier pignon fou d'arbre de sortie (20) s'engrène directement avec le premier pignon (17) du deuxième pignon fou d'arbre d'entrée (16), et dans laquelle le deuxième pignon (18) du deuxième pignon fou d'arbre d'entrée (16) s'engrène directement avec le deuxième pignon (23) du deuxième pignon fou d'arbre de sortie (21), **caractérisé en ce que** l'ensemble de pignon fou (14) comprend un deuxième embrayage à double vitesse (24) par lequel le deuxième pignon fou d'arbre de sortie (21) peut être connecté à l'arbre de sortie (12) dans une première position active et le premier pignon fou d'arbre de sortie (20) peut être connecté à l'arbre de sortie (12) dans une deuxième position active de manière non rotative.

2. Unité de transmission (1) selon la revendication 1, **caractérisée en ce que** la liaison de la machine électrique (50) s'effectue par l'intermédiaire du premier pignon fou d'arbre d'entrée (15) de l'ensemble de pignon fou (14).

3. Unité de transmission (1) selon la revendication 1, **caractérisée en ce que** la liaison de la machine électrique (50) s'effectue par l'intermédiaire du premier pignon (22) du deuxième pignon fou d'arbre de sortie (21).

4. Unité de transmission (1) selon la revendication 1, **caractérisée en ce que** le deuxième pignon fou d'arbre de sortie (21) présente un troisième pignon (33) par lequel la liaison de la machine électrique (50) dans l'ensemble de pignon fou (14) s'effectue.

5. Unité de transmission (1) selon l'une quelconque des revendications 2 à 4, **caractérisée en ce que** la machine électrique (50) présente un pignon d'entraînement (51) qui est en prise d'engrènement avec un des pignons fous de l'ensemble de pignon fou (14) par l'intermédiaire d'un pignon intermédiaire (30).

6. Unité de transmission (1) selon la revendication 5, **caractérisée en ce que** le pignon intermédiaire (30) est un pignon étagé avec un pignon plus petit (32) et un pignon plus grand (33).

7. Unité de transmission (1) selon l'une quelconque des revendications 1 à 6, **caractérisée en ce que** le premier embrayage à double vitesse (19) de l'arbre d'entrée (11) est disposé axialement entre les pignons (22, 23) du deuxième pignon fou d'arbre de sortie (21) et le deuxième embrayage à double vitesse (24) sur l'arbre de sortie (12) est disposé axialement entre les pignons (17, 18) du deuxième pignon fou d'arbre d'entrée (16).

8. Unité de transmission (1) selon l'une quelconque des revendications 1 à 7, **caractérisée en ce que** la boîte de vitesses (10) comprend au moins un troisième embrayage à double vitesse (27) par lequel deux pignons fous supplémentaires (25, 26) qui sont disposés sur l'arbre de sortie (12) peuvent être connectés de manière non rotative à l'arbre de sortie (12).

9. Unité de transmission (1) selon l'une quelconque des revendications 1 à 7, **caractérisée en ce que** la boîte de vitesses (10) comprend au moins un troisième embrayage à double vitesse (30) par lequel deux pignons fous supplémentaires (34, 35) qui sont disposés sur l'arbre d'entrée (11) peuvent être connectés de manière non rotative à l'arbre d'entrée (11).

10. Unité de transmission (1) selon la revendication 4 et la revendication 9, **caractérisée en ce qu'**un des deux pignons fous supplémentaires (34, 35) est directement en prise d'engrènement avec le troisième pignon (33) du deuxième pignon fou d'arbre de sortie (21).

11. Unité d'entraînement avec une unité de transmission (1) selon l'une quelconque des revendications 1 à 10 et avec un entraînement principal (2), dans laquelle l'arbre d'entrée (11) de la boîte de vitesses de l'unité de transmission est couplé à l'entraînement principal.

12. Unité d'entraînement selon la revendication 11, **caractérisée en ce qu'**un accouplement (3) est prévu entre l'entraînement principal (2) et l'arbre d'entrée (11).
